# FASCICULE DE BREVET EUROPEEN

(11) **EP 0 978 673 B1**
(45) Date de publication et mention de la délivrance du brevet: **27.10.2004**
(21) Numéro de dépôt: 99401977.6
(22) Date de dépôt: 04.08.1999
(51) Int. Cl.: F16J 15/44

(54) **Agencement d'étanchéité à réglage automatique de jeu**
Dichtungsanordnung mit automatischer Spieleinstellung
Sealing arrangement with automatic clearance adjustment

(30) Priorité: 05.08.1998 FR 9810041
(43) Date de publication de la demande: 09.02.2000
(73) Titulaire: Snecma Moteurs, 75015 Paris (FR)
(72) Inventeur: Bainachi, Daniel, 77210 Avon (FR)
(74) Mandataire: Nguyen, Dominique

(56) Documents cités:
- DE-C- 373 406
- US-A- 3 600 048
- US-A- 3 874 677
- US-A- 5 145 189
- PATENT ABSTRACTS OF JAPAN vol. 011, no. 111 (M-578), 8 avril 1987 (1987-04-08) & JP 61 256065 A (NIPPON PILLAR PACKING CO LTD), 13 novembre 1986 (1986-11-13)

## Description

L'invention a trait à un agencement d'étanchéité comprenant notamment un joint à réglage automatique de jeu.

Ce joint appartient à la famille des joints segmentés, composés d'éléments appelés segments qui sont aboutés et s'étendent chacun sur une portion de circonférence ; ces segments sont unis par un ressort de bandage qui les entoure et tend à les presser contre une pièce telle qu'un arbre, avec laquelle l'étanchéité doit être établie.

Le problème auquel on s'attaque ici est l'usure du joint produite par le frottement dû à la rotation de l'arbre sur le joint : comme cette usure est proportionnelle à la vitesse de rotation de l'arbre et à la pression des segments, on est tenté de réduire autant que possible cette pression. Un mode d'action consisterait à choisir convenablement le ressort ou à régler ses caractéristiques, en évitant notamment qu'il ne soit trop serré, mais cela ne serait en réalité ni très facile ni même utile car cet effort est minime comparé à l'effort radial de pression exercé sur les segments. Une autre solution est d'utiliser la vitesse de rotation du rotor pour créer une pression d'air hydrodynamique au niveau du contact segments/rotor, moyennant certains aménagements sur les segments (patins de Rayleigh). L'inconvénient majeur de cette technologie est son inefficacité à bas et moyen régime du rotor. Rien d'efficace n'a donc été fait jusqu'à présent pour limiter l'usure des joints segmentés, ce qui explique que leur longévité n'est que de l'ordre du millier d'heures, bien insuffisante pour la plupart des applications.

DE-C-373 406 montre un agencement permettant une réduction automatique, pouvant mener à son annulation, de la pression d'application des segments du joint sur la pièce de frottement. Sous sa forme la plus générale, cet agencement d'étanchéité connu comprend un joint d'étanchéité composé de segments aboutés en arc de cercle et d'un ressort de bandage unissant les segments, les segments ayant une face d'étanchéité opposée au ressort et disposée contre une pièce traversant une ouverture d'une paroi séparant une enceinte à haute pression d'une enceinte à base pression ; dans cet agencement, le joint est disposé devant l'ouverture avec une première portion d'une face opposée à la face d'étanchéité soumise à la haute pression et d'une première superficie et une seconde portion de ladite face opposée à la face d'étanchéité soumise à la basse pression et d'une deuxième superficie, les faces d'étanchéité sont façonnées en une chambre entourée par une lèvre d'appui sur la pièce, des orifices traversant les segments des chambres à l'enceinte à haute pression. Selon l'invention, les orifices sont calibrés et les superficies desdites première et deuxième portions sont analogues de façon que des efforts radiaux de pression, de ressort, de frottements sur les segments génèrent une pression de contact entre les segments et la pièce de frottement minime ou s'équilibrent pour un jeu entre les segments et la pièce de frottement bien précis garantissant une perméabilité à l'air souhaitée. Un tel joint doit être distingué aussi bien d'un joint tel que celui du brevet français 2 688 283, qui se déplace axialement devant une ouverture pour produire deux états d'étanchéité selon la différence de pression et n'est pas segmenté, que de celui du brevet français 2 613 019, où un liquide est injecté à travers le joint pour décoller les segments de l'arbre. Ce joint nécessite en effet un circuit spécial d'alimentation à haute pression afin d'injecter le liquide et de le récupérer.

Une réalisation illustrative de l'invention va maintenant être décrite plus en détail à l'aide des figures suivantes :
- la figure 1 est une vue générale du joint,
- la figure 2 est une vue en coupe d'un segment du joint,
- la figure 3 est une vue de la face d'étanchéité statique d'un segment,
- et la figure 4 est une vue de la face d'étanchéité dynamique d'un segment.

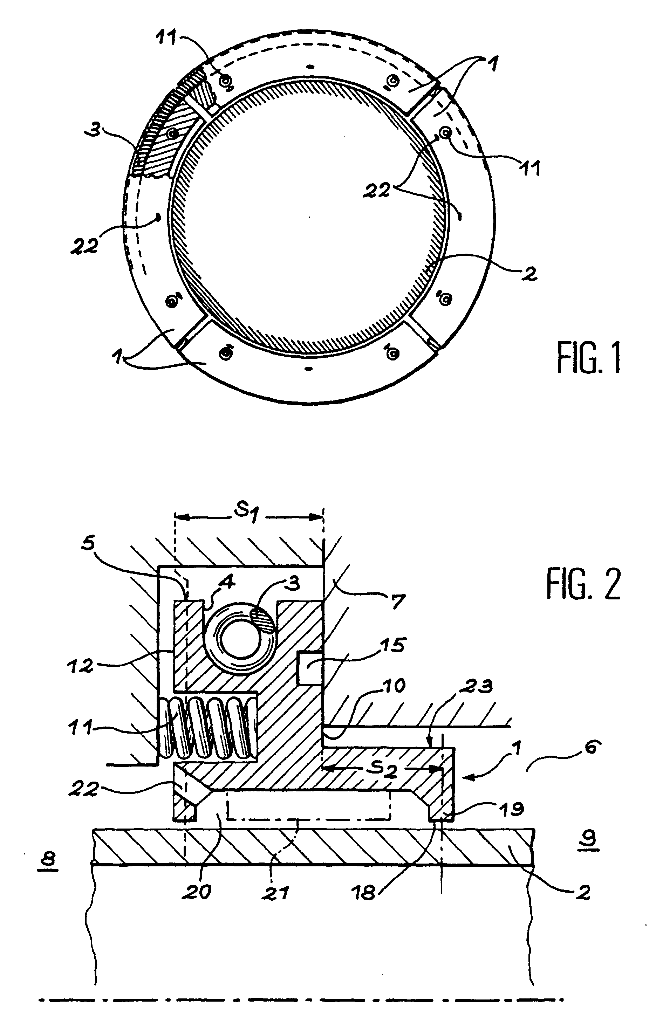

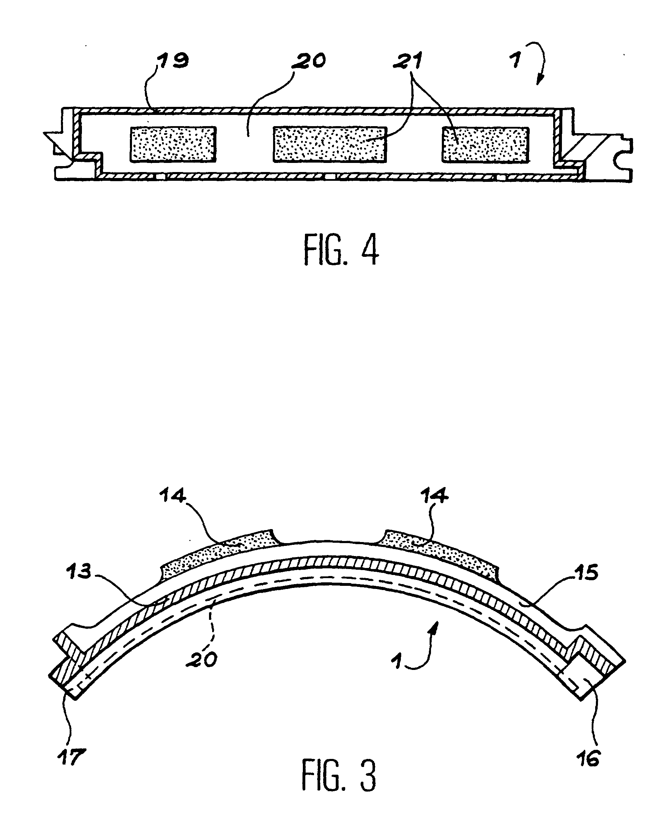

On rappelle tout d'abord à l'aide de la figure 1 qu'un joint segmenté est composé d'une pluralité de segments 1 aboutés, ici au nombre de quatre et s'étendant chacun sur un quart de circonférence, et pressés sur la surface d'un arbre 2 par un ressort 3 de bandage qui les entoure et les unit. En se reportant à la figure 2, on voit que le ressort 3 est retenu dans une gorge 4 de la face radialement extérieure 5 des segments 1. L'arbre 2 passe au travers d'une ouverture 6 d'un stator 7 qui délimite une première enceinte 8 et une seconde enceinte 9 entre lesquelles la séparation doit être maintenue malgré l'ouverture 6. Le joint exerce donc une étanchéité dynamique avec l'arbre 2, puisque ce dernier tourne, et une étanchéité statique avec le stator 7, contre lequel les segments 1 sont appuyés par leur face postérieure 10, mieux visible à la figure 3. Des ressorts axiaux 11, comprimés entre le stator 7 et la face antérieure 12 des segments 1, maintiennent cette étanchéité statique, qui s'exerce par une lèvre 13 s'étendant sur une partie de la largeur de la face postérieure 10. Des patins d'appui 14, dont le but est de limiter la pression de contact, sont également pressés contre le stator 7 ; ils sont séparés de la lèvre 13 par une rainure de décharge 15. On voit également à la figure 3 qu'une des extrémités des segments 1 forme un évidement 16 dans lequel pénètre l'extrémité opposée, en saillie, 17 du segment 1 voisin. On obtient ainsi une meilleure cohésion du joint, et surtout un recouvrement total de l'ouverture 6 sur la circonférence.

Les éléments spécifiques à l'invention se trouvent sur la partie radialement interne des segments 1, près de l'arbre 2 : la face d'étanchéité 18 de chacun des segments 1 est façonnée pour présenter une lèvre 19 périphérique d'appui sur l'arbre 2, en laquelle s'étend une chambre 20 correspondant à un creux de la surface 18 ; cependant, la chambre 20 est partiellement occupée par des patins d'appui 21 destinés à s'appuyer eux aussi sur l'arbre 2 afin de diminuer la pression de contact s'exerçant sur la lèvre 19. Des orifices calibrés 22 percent les segments 1 depuis la chambre 20 jusqu'à l'enceinte à haute pression 8. On remarque que cette portion radialement intérieure des segments 1 comprend une extension 23 qui s'étend dans l'ouverture 6, du côté de l'enceinte à basse pression 9.

L'invention exposée ici est incluse dans une turbomachine dont les volumes internes sont occupés par des pressions différentes originaires de conduits menant à diverses régions des compresseurs, ainsi qu'il est bien connu dans la technique.

Les pressions différentes ont pour buts de confiner des liquides dans les enceintes à basse pression (notamment l'huile de lubrification dans les chambres à roulement ; les joints servent alors à compléter l'étanchéité), de favoriser des courants d'air vers certaines parties de la machine à ventiler ou de régler les déformations de membranes flexibles.

Quand la machine est au repos, les segments 1 sont pressés contre l'arbre 2 par la force Fr du ressort de bandage 3, car aucune force de pression n'existe alors ; cela n'est cependant pas dommageable puisque l'arbre 2 est immobile. Quand la machine tourne, une pression P1 est instaurée dans l'enceinte à haute pression 8 et une pression P2 de plus petite valeur dans l'enceinte à basse pression 9. Ces pressions exercent sur le segment 1 les forces centripètes P1.S1 et P2.S2 selon les notations de la figure, où S1 et S2 sont les superficies de la face extérieure baignées par les deux pressions (S2 étant la superficie de l'extension, mentionnée plus haut, du segment 1 dans l'ouverture 6) ; de plus, la chambre 20 s'emplit d'une pression P3 quelque peu inférieure à la pression P1 à cause des pertes de charge produites à travers les orifices calibrés 22, mais supérieure à la pression P2 ; cette pression exerce sur le segment 1 une force opposée aux précédentes et dont l'intensité est sensiblement P3.(S1+S2). La force totale de pression est donc égale à Fr+P1.S1+P2.S2-P3.(S1+S2). Comme P3 est sensiblement plus proche de P1 que de P2, cette force totale est inférieure à la force Fr exercée au repos, ce qui signifie que la pression de contact du joint sur l'arbre 2 est allégée. Si une construction judicieuse du joint est choisie, avec notamment une force de ressort Fr suffisamment faible, des surfaces S1 et S2 bien choisies et si les pressions P1 et P2 sont suffisamment différentes, cette force résultante peut même devenir négative, c'est-à-dire que les segments 1 se décollent de l'arbre 2 et qu'ils ne sont donc plus soumis à aucune usure : cette situation est préférée. Un équilibre tend alors à s'instaurer, car des fuites se produisent de l'enceinte à haute pression 8 vers l'enceinte à basse pression 9 à travers la chambre 20, et la pression P3 diminue avec l'augmentation du jeu entre le segment 1 et l'arbre 2 : elle pourrait théoriquement atteindre une pression moyenne, égale à (P1+P2)/2, si le jeu était suffisant, mais la force exercée sur les segments 1 tendrait alors vers la valeur Fr+ ½ (P1-P2)(S1-S2), qui est normalement positive puisque les superficies S1 et S2 sont analogues. L'équilibre est donc en général réalisé avec une valeur de P3 intermédiaire entre sa valeur en l'absence de jeu et la moyenne des pressions P1 et P2 ; cette valeur de pression est obtenue avec un léger jeu entre les segments 1 et l'arbre 2, qui a l'avantage d'éliminer les frottements tout en limitant les fuites d'air d'une enceinte 8 à l'autre 9. Les orifices calibrés 22 peuvent avoir un diamètre d'un millimètre environ pour qu'un fonctionnement satisfaisant soit assuré, la pression P3 étant juste suffisante pour décoller les segments 1.

## Revendications

1. Agencement d'étanchéité, comprenant un joint d'étanchéité composé de segments (1) aboutés en arc de cercle et d'un ressort de bandage (3) unissant les segments (1), les segments ayant une face d'étanchéité (18) opposée au ressort et disposée contre une pièce (2) de frottement traversant une ouverture (6) d'une paroi séparant une enceinte à haute pression (8) d'une enceinte à base pression (9), dans lequel le joint est disposé devant l'ouverture avec une première portion d'une face opposée à la face d'étanchéité soumise à la haute pression et d'une première superficie (S1) et une seconde portion de ladite face opposée à la face d'étanchéité soumise à la basse pression et d'une deuxième superficie (S2), les faces d'étanchéité sont façonnées en une chambre (20) entourée par une lèvre (19) d'appui sur la pièce (2), des orifices (22) traversent les segments depuis les chambres (20) jusqu'à l'enceinte à haute pression (8), **caractérisé en ce que** les orifices (22) sont calibrés et les superficies (S1, S2) desdites première et seconde portions sont analogues de façon que des efforts radiaux de pression, de ressort, de frottements sur les segments (1) génèrent une pression de contact entre les segments et la pièce de frottement minime ou s'équilibrent pour un jeu entre les segments et la pièce de frottement bien précis garantissant une perméabilité à l'air souhaitée.

## Claims

1. Sealing arrangement, comprising a seal composed of butted arc-of-circle shaped segments (1) and a clamping spring (3) holding the segments (1) together, the segments having a sealing face (18) opposite to that of the spring and disposed against a friction piece (2) traversing an opening (6) of a wall separating a high pressure enclosure (8) from a low pressure enclosure (9), in which the seal is disposed in front of the opening with a first portion of a face opposite to the sealing face subjected to the high pressure and a first surface (S1) and a second portion of the said face opposite to the sealing face subjected to the low pressure and a second surface (S2), the sealing faces are formed as a chamber (20) surrounded by a lip (19) bearing on the piece (2), orifices (22) traverse the segments from the chambers (20) to the high pressure enclosure (8), **characterized in that** the orifices (22) are calibrated and the surfaces (S1, S2) of the said first and second portions are similar such that the radial pressure, spring and friction forces on the segments (1) generate a contact pressure between the segments and the friction part that is minimal or which balance for a very precise clearance between the segments and the friction piece guaranteeing a desired permeability to air.

## Patentansprüche

1. Dichtungsanordnung, die aus einer Dichtung besteht, die sich aus kreisbogenförmig aneinandergefügten Segmenten (1) und einer die Segmente (1) zusammenhaltenden Ringfeder (3) zusammensetzt, wobei die Segmente (1) eine von der Feder abgewandte Dichtungsseite (18) aufweisen, die an einem Reibungsteil (2) anliegend angeordnet ist, welches sich durch eine Öffnung (6) in einer Wand erstreckt, die einen abgeschlossenen Hochdruckraum (8) von einem abgeschlossenen Niederdruckraum (9) trennt, wobei die Dichtung mit einem ersten Abschnitt einer Seite, die der dem Hochdruck ausgesetzten Dichtungsseite gegenüberliegt, und einer ersten Oberfläche (S 1) sowie mit einem zweiten Abschnitt dieser Seite, die der dem Niederdruck ausgesetzten Dichtungsseite gegenüberliegt, und einer zweiten Oberfläche (S2) vor der Öffnung angeordnet ist, wobei die Dichtungsseiten in Form einer Kammer (20) ausgeführt sind, die von einer Anlagelippe (19), die an dem Teil (2) anliegt, umgeben wird, wobei sich Öffnungen (22) von den Kammern (20) aus durch die Segmente bis zu dem abgeschlossenen Hochdruckraum (8) erstrecken,
**dadurch gekennzeichnet,**
**dass** die Öffnungen (22) eingestellt sind und die Oberflächen (S1, S2) des genannten ersten und zweiten Abschnitts analog ausgeführt sind, so dass durch Druck, durch die Feder, durch Reibungen radial auf die Segmente (1) wirkende Kräfte einen Kontaktdruck zwischen den Segmenten und dem Reibungsteil erzeugen, der minimal ist, oder sie gleichen sich aus, so dass ein sehr präzises Spiel zwischen den Segmenten und dem Reibungsteil entsteht, das eine gewünschte Luftdurchlässigkeit gewährleistet.
